# EUROPEAN PATENT SPECIFICATION

(11) **EP 2 998 604 B1**
(45) Date of publication and mention of the grant of the patent: **15.01.2020**
(21) Application number: 14185486.9
(22) Date of filing: 19.09.2014
(51) Int. Cl.: F16D 48/06

(54) **System and method for controlling a clutch**
System und Verfahren zur Steuerung einer Kupplung
Système et procédé de commande d'un embrayage

(43) Date of publication of application: 23.03.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Trencseni, Balazs, 1037 Budapest (HU); Nemeth, Huba, 1116 Budapest (HU); Szimandl, Barna, 2038 Sóskút (HU)

(56) References cited:
- EP-A1- 0 997 659
- EP-A2- 0 731 294
- EP-A2- 2 101 074
- WO-A1-2011/031224
- DE-A1-102004 022 380
- US-A- 5 184 301

## Description

The present invention relates to a clutch control system and to a method for controlling a clutch to manage driveline engagement states for vehicles with a manual transmission.

### Background

See as relevant prior art publications EP0997659, WO2011/031224, US5184301, DE102004022380, EP0731294 and EP2101074.

Automatic driveline clutch control is a characteristic application in automated transmissions, whereas manual transmissions are typically equipped with manually operated servo clutches. The automatic clutch control involves additional costs and when applying conventional electronically controlled clutches with manual transmission, the achievable improvement does not warrant the increased costs.

The automatic clutch operation depends to a large extend on the current gear position. For electric control units of manual transmission this information is not available. On the other hand, in certain driving situations and for different aspects, the automated control of the clutch may be more beneficial than a manual control by the driver. The clutch pedal provides only a limited amount of information that does not suffice to decide whether an automatic or a manual control shall be activated on the clutch engagement control.

Conventional methods improve the clutch engagement of the vehicle transmission when the system is able to control the engagement independently of the driver. In most cases these methods are restricted to cooperate with automated transmission control where a direct control of the clutch engagement is anyway needed, since no clutch pedal is available.

For example, DE 10 2005 014 505 suggests a clutch control to improve the start of the vehicle with an automatic transmission control. US 5,184,301 discloses an electronically controlled clutch in combination with a manual transmission, wherein an interface follows the clutch pedal demand and the state of the engine is controlled to reduce clutch wear as well as to improve the vehicle launch comfort and the performance. A further conventional method is described in EP 2 302 248, wherein the vehicle clutch is automatically controlled to support an automatic engine start function when the transmission is not in a neutral position.

In further manually operated transmissions the driver controls directly the clutch engagement portion by the clutch pedal. Such operation may be supported by engine interventions adjusting the speed and torque of the engine according to the clutch engagement defined by the driver. Further automated control of clutch operations are implemented only for special situations, which are identified based on vehicle state variables, like transmission gear position, engine speed, accelerator pedal, etc.

Therefore, there is a demand to increase the automation level of a manual transmission in combination with electronically controlled transmission clutch. In particular, for those cases where the gear position is unknown and the clutch pedal information is insufficient to decide between an automated and manual control.

### Summary of the Invention

The present invention solves the afore-mentioned problem by providing a clutch control system according to claim 1, a method for controlling a clutch according to claim 14 and a computer program product according to claim 15.

The present invention relates to a clutch control system for a vehicle with a clutch and a manual transmission. The clutch control system comprises a driver interface and a clutch control unit. The driver interface is configured to switch between an active state and an inactive state, wherein the driver interface is operable by a driver of the vehicle. The clutch control unit is configured to receive an indication of a switching operation of the driver interface. The clutch control unit is further operable to control the clutch to engage or to disengage in response to the received indication and/or to control the clutch as long as the driver interface is in the active state.

Therefore, whenever the state of the driver interface is changed (e.g. by switching from an engagement to a disengagement or from a disengagement to an engagement of the clutch), an indication is issued and the clutch control unit takes over the control of the clutch. Furthermore, it is understood that the engaging and/or disengaging of the clutch is a process that may be instantaneously (or very fast) or that takes some time (or may be more or less delayed). For example, during vehicle launch the engagement portion may be continuously changed.

The present invention solves the above-mentioned problem by providing a driver interface which is operated by the driver of the vehicle and which indicates an active state or an inactive state. Furthermore, the clutch control unit can be programmed to provide a default action when the driver actuates the driver interface. Therefore, the driver decides whether or not automated clutch control is desired and, in addition, the clutch control unit provides a default action carried out upon an activation of the switch provided by the driver interface. Therefore, the present invention provides the advantage that a direct control of the driver over the activity of the automated clutch operations is made possible, i.e. not only indirect conditions enable and disable clutch control interventions.

For example, the default actions include a full disengagement of the clutch, when the driver interface indicates an activated state or is switched into the activated state, and a full engagement of the clutch, when the driver deactivates the clutch control system by operating the driver interface. Thus, the driver interface enables a direct driver interference with the clutch control so that the gear position has not to be known in order to decide what a reasonable operation is to be performed next.

Hence, the default action may be defined as follows. The clutch control unit may be configured to disengage the clutch, when the indication indicates a switching in the active state. The clutch control unit may further be configured to engage the clutch, when the indication indicates a switching in the inactive state.

The indication may be generated by an electric circuit which is opened or closed by the switching operation or may relate to any other signal provided the driver interface.

In yet another embodiment the vehicle further comprises a clutch pedal coupled to the clutch control unit. The clutch control unit may be configured, when the driver interface is in the inactive state, to control the clutch based on an actuation of the clutch pedal. In this embodiment the clutch pedal may coupled directly or indirectly (e.g. via an electronic control unit and/or a system bus) to the clutch control unit.

In yet another embodiment the clutch control system, further comprises a timer coupled to the clutch control unit. The timer may be configured to measure a time-out period and may be activated upon switching the driver interface from the active state to the inactive state. The clutch control unit is configured to engage the clutch only upon expiring of the time-out period.

In yet another embodiment the time-out period is equal or longer than minimum time period needed for engaging the clutch without stalling the engine of the vehicle. The may allow a fast launching of the vehicle while ensuring that the engine does not stall during launching.

In yet another embodiment the driver interface further comprises locking means to lock the driver interface in the active state. The locking means may be operated by the driver and locks the switch implemented by the driver interface. Such locking means may be advantageous in particular for those embodiments, where the driver interface will go back in the inactive state after a predetermined time period so that a locking can prevent such default return switching into the inactive state.

In yet another embodiment the driver interface is usable manually by the driver, for example, by hand or by foot.

In yet another embodiment the clutch control unit is further configured to control a transmission split gear, wherein the managing of the driveline engagement states can be implemented in the same way as described above.

In yet another embodiment the clutch control unit is configured to receive an acceleration demand initiated by the driver, wherein, when the driver interface is in the active state, the clutch control unit is configured to engage the clutch, when the clutch control unit receives the accelerations demand.

In yet another embodiment the clutch control unit is configured to receive a deceleration demand initiated by the driver and to determine a critical state of an engine, wherein, when the driver interface is in the active state and the clutch control unit receives the decelerations demand and the critical engine state is determined, the clutch control unit is configured to disengage the clutch to prevent a stall of the engine.

In yet another embodiment the vehicle is configured to acquire parametric data determining an engine state so that the critical state of the engine corresponds to an engine state wherein the parametric data are outside a predetermined range. The parametric data may comprise at least one of the following: a rotational speed of the engine, a torque demand, a level of the deceleration demand (e.g. the level of actuating the breaking pedal).

In further embodiments, the driver interface enables more than two switching positions. For example, the locked position may be implemented as separate switching position and the active state position may or may not be stable. A non-stable position may, for example, involve a timer to set a predetermined time period so that upon expiration of the predetermined time period a further default action is carried out (e.g. returning to the inactive state).

The present invention relates also to a vehicle, wherein the vehicle comprises: a manual transmission, an engine, a clutch configured to couple and decouple the manual transmission and the engine, a braking interface (e.g. a braking pedal) for providing a deceleration demand, an acceleration interface (e.g. an acceleration pedal) for providing an acceleration demand to the engine, and one of the mentioned clutch control systems.

The present invention relates also to a method for controlling a clutch of a vehicle with a manual transmission. The method comprising: switching, by a driver interface, between an active state and an inactive state, receiving, by clutch control unit, an indication of the switching operation, controlling, by clutch control unit, the clutch to engage or to disengage in response to the received indication; and controlling, by clutch control unit, the clutch as long as the driver interface is in the active state.

This method may also be implemented in software or a computer program product (e.g. a storage device). Therefore, further embodiments relate to a computer program having a program code for performing the method, when the computer program is executed on a computer or processor.

In further embodiments, the method may comprise further optional steps implementing all or part of the functions as disclosed for the clutch control system. In addition, the order of steps may be different or is not important to achieve the desired effect.

### Brief Description of the Drawings

Various embodiments of the present invention will be described in the following by way of examples only, and with respect to the accompanying Figures, in which:
- Fig. 1: depicts a clutch control system according to an embodiment of the present invention;
- Fig. 2: depicts another embodiment of a clutch control system according to the present invention;
- Fig. 3: depicts yet another embodiment of a clutch control system according to the present invention;
- Fig. 4: depicts yet another embodiment of a clutch control system according to the present invention;
- Fig. 5: depicts a positioning of the driver interface of the clutch control system according to the present invention; and
- Fig. 6: depicts flow diagram for a method for controlling a clutch according to the present invention.

### Detailed Description

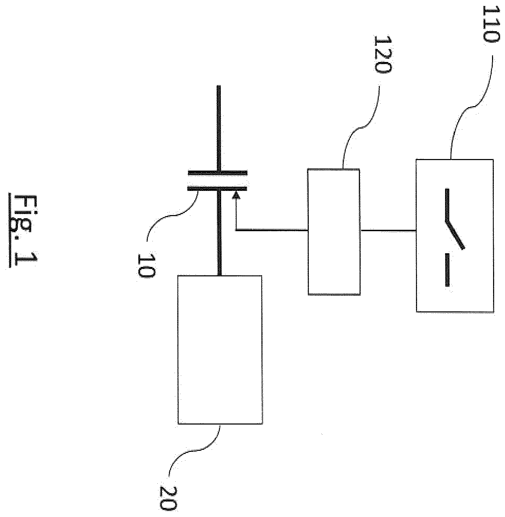

Fig. 1 depicts a clutch control system for a vehicle with a clutch 10 and a manual transmission 20. The clutch control system comprises a driver interface 110 and a clutch control unit 120. The driver interface 110 is configured to switch between an active state and an inactive state, wherein the driver interface is operable by a driver of the vehicle. The clutch control unit 120 is configured to receive an indication of a switching operation of the driver interface 110. The clutch control unit 120 is operable to control the clutch 10 in response to the received indication and as long as the driver interface 110 is in the active state. In the inactive state the controlling of the clutch 10 by the clutch control unit 120 is optional. The controlling involves, in particular, a managing of the engagement and disengagement of the clutch 10.

Therefore, according to the embodiment as depicted in Fig. 1, the driver interface 110 transmits information to the clutch control unit 120, wherein the information may indicate the switched state as set by the driver using the driver interface 110. In the simplest case the driver interface 110 is just a button or any other switch which can be actuated by the driver either by hand or by foot. The clutch control unit 120 is connected to the clutch 10 so that the clutch 10 is disengaged or engaged in response to a received signal from the clutch control unit 120. When the clutch 10 is engaged, the drive line between the manual transmission 20 and an engine (not shown in Fig. 1) is connected, and when the clutch 10 is disengaged, the drive line between the manual transmission 20 and the engine is decoupled.

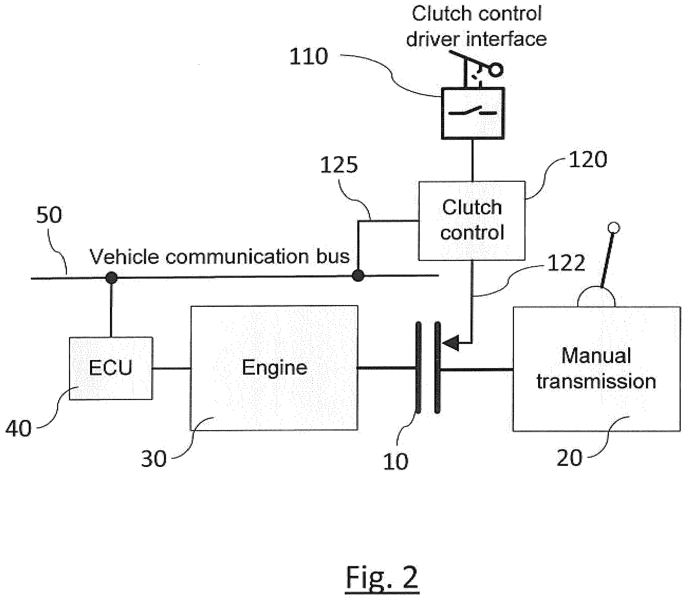

Fig. 2 depicts another embodiment for a clutch control system according to the present invention. Again, the driver interface 110 provides a driver operated switch and is connected with the clutch control unit 120. The clutch control unit 120 is connected with the clutch 10 via a control line 122. The clutch 10 is interposed between the manual transmission 20 and an engine 30 and couples the engine 30 to the manual transmission 20 or decouples the engine 30 from the manual transmission 20 in response to a control signal received from the clutch control 120.

The clutch control 120 is further connected to a vehicle communication bus 50 via a communication line 125. The communication line 125 provides an information path from the clutch control unit 120 to any other component in the vehicle which is connected to the vehicle communication bus 50. For example, the clutch control unit 120 can exchange information with an electronic control unit (ECU) 40 which is also connected to the vehicle communication bus 50. The ECU 40 controls, for example, the engine 30. This additional communication path provides the advantage that in response to a particular clutch operation also the engine 30 can be controlled accordingly. For example, when the clutch control unit 120 disengages the clutch 10, a respective signal can be forwarded to the ECU 40 in order to slow down the engine 30 so that the engine does not speed up at the moment the clutch 10 decouples the engine from the load (connected to the manual transmission 20).

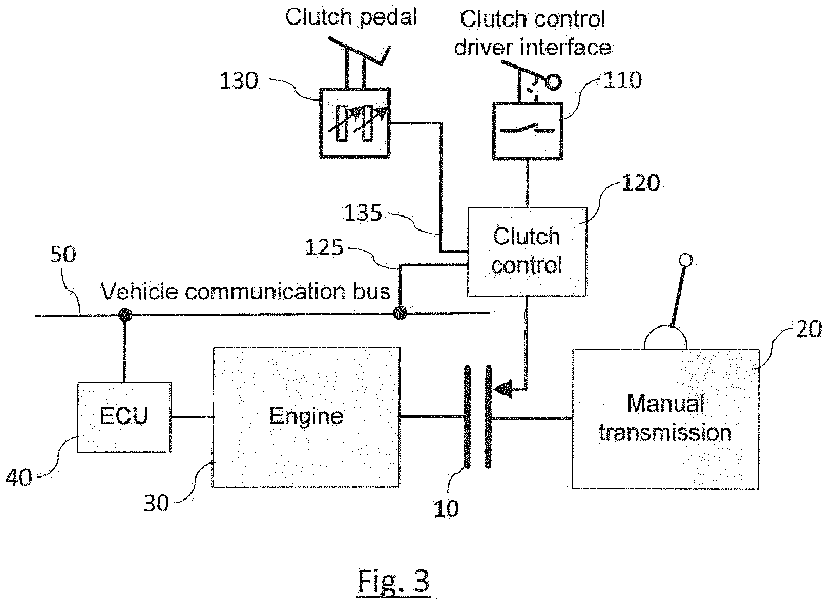

Fig. 3 provides yet another embodiment for the clutch control system according to the present invention. In the embodiment of Fig. 3 an additional clutch pedal 130 is provided in the vehicle and the clutch pedal 130 is connected to the clutch control unit 120 via a clutch connection line 135. All other components depicted in Fig. 3 are the same as in the embodiment of Fig. 2 so that a repetition of the description of these components can be omitted here.

In the embodiments of Figs. 2 and 3, the clutch control unit 120 may, for example, be operated in that, in an inactive state, the automatic clutch control is disabled. This disabling of the automatic clutch control may not take place instantaneously, but may only be set up after a time-out period has expired (for which an optional timer can be provided in the clutch control unit 120). After disabling the automatic clutch control in the inactive state, the clutch 10 can be controlled by the clutch pedal 130. Therefore, if a driver inactivates the automated clutch control with the driver interface 110, the clutch will further be controlled via the position of the clutch pedal 130 in the normal way as for vehicles without an automated clutch control.

For this purpose, the clutch pedal 130 is connected to the clutch control unit 120 (e.g. directly or via an optional ECU) so that the clutch control driver interface (the driver interface 110) will not interfere with the controlling of the clutch 10 via the clutch pedal 130. Hence, when the clutch pedal 130 is actuated (for example pressed down), the clutch control unit 120 will follow the demand as indicated by the clutch pedal 130.

In addition, the clutch pedal position may be ignored, when the clutch control unit 120 determines that the vehicle may stall due to deceleration. To prevent stalling the engine, the clutch control unit 120 may disengage the clutch 10 independently of the current clutch pedal position. Therefore, in further embodiments, the clutch control unit 120 is configured to let the clutch pedal 130 control the clutch 10 only within a particular operation range defined by various parameters as, for example, a rotational speed of the engine that have to be within a particular parameter range for normal operation of the vehicle.

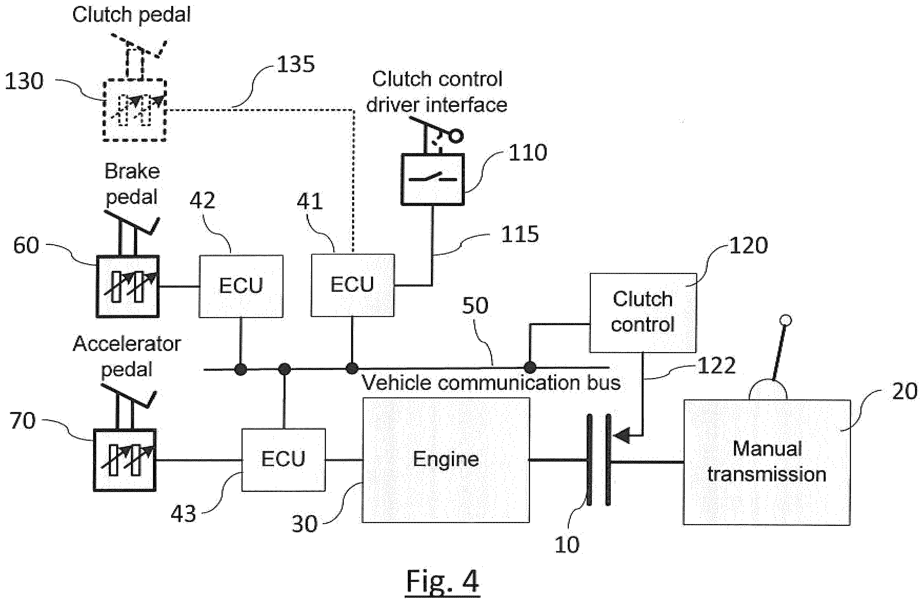

Fig. 4 depicts yet another embodiment of the clutch control system according to the present invention. In the embodiment of Fig. 4, the driver interface 110 (clutch control driver interface) is connected via a signal line 115 with a first ECU 41. The first ECU is connected to the vehicle communication bus 50. In addition, a second ECU 42 and a third ECU 43 are likewise connected to the vehicle communication bus 50. In this embodiment the vehicle comprises a brake pedal 60, an acceleration pedal 70 and an optional clutch pedal 130 (as driver operators), wherein the brake pedal 60 is connected to the second ECU 42 to receive, for example, a braking signal (braking demand), and the an acceleration pedal 70 is connected to the third ECU 43 to receive an acceleration signal (acceleration demand). The optional clutch pedal 130 is again connected via the clutch connection line 135 with the first ECU 41. The third ECU 43 controls the engine 30. The clutch control unit 120 is also connected to the vehicle communication bus 50 and comprises again a control line 122, which controls the clutch 10 disposed between the engine 30 and the manual transmission 20.

When the driver operates the brake pedal 60, the second ECU 42 will generate the braking signal and communicates the braking signal via the vehicle communication bus 50, for example, to the braking system of the vehicle. Likewise, if the driver operates the acceleration pedal 70, the acceleration signal will be transmitted to the third ECU 43 which in turn controls the engine 30 so that an acceleration is carried out.

In this embodiment, the clutch pedal 130 is optional so that if no clutch pedal 130 is present, the clutch control will only be provided via the clutch control unit 120. For example, if the driver interface 110 indicates an inactive state or is switched into the inactive state the clutch control unit 120 will fully engage the clutch 10. On the other hand, when the driver interface 110 is actuated to switch into the active state, the clutch control unit 120 will disengage the clutch 10. As a consequence, the engine 30 is decoupled from the manual transmission 20. Therefore, the clutch 10 can be fully controlled only by proper actuation of the driver interface 110.

Even when the optional clutch pedal 130 is present, the decoupling of the engine 30 from the manual transmission 20 may be carried out independently of the position of the clutch pedal 130 (for example, when the driver has switched the driver interface 110 into the active state).

Furthermore, during the active state, when the clutch is disengaged, the clutch can engage if the driver desires to launch the vehicle and provides a respective indication. This indication may, for example, be an operation of the acceleration pedal 70 by the driver. Therefore, when the driver intends to start the vehicle, the clutch 10 may automatically engage so that the vehicle can be started. Furthermore, when the driver interface 110 remains in the active state, the clutch control unit 120 may further follow the driver demand in that it remains engaged when the driver further accelerates the vehicle as indicated by further pressing the acceleration pedal 70. The clutch control unit 120 may also disengage the clutch 10 when the vehicle decelerates and there is a risk that the engine can be stalled (for example, if the engine 30 slows down to such an extent that it cannot reliable run). This mode may be defined by a set of parameters which define a region within which the clutch control unit 120 may fully control the clutch 10.

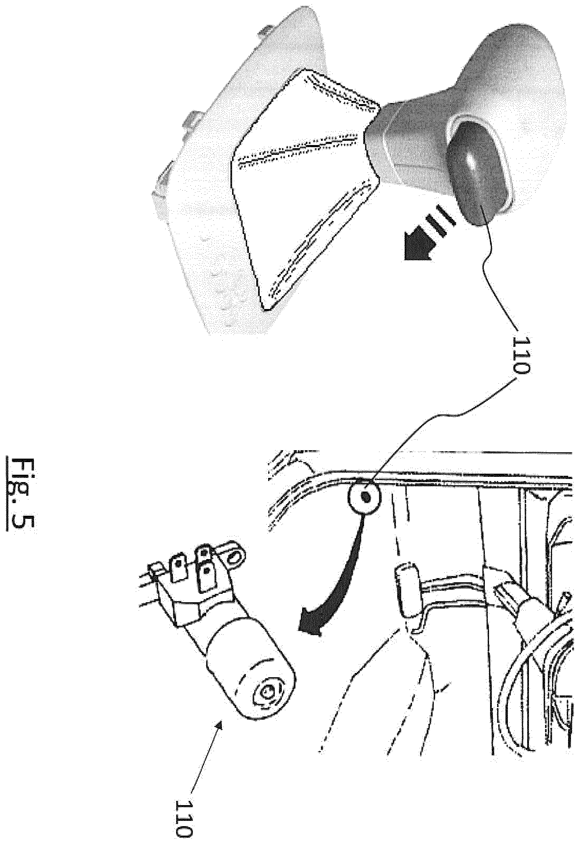

Fig. 5 depicts a part of a vehicle with a driver interface 110 being arranged near the cabin floor on the left-hand side so that it can be operated by the left foot of the driver. In further embodiments, the driver interface 110 may also be located near the gear lever (see left-hand side in Fig. 5) and, in particular, may be arranged as a button at the gear lever so that the driver can operate the driver interface 110 by hand.

In further embodiments the clutch control system may comprise a timer for setting a delay time (time-out period) so that the clutch 10 is not actuated immediately after the driver interface 110 is switched from one state to another. For example, the timer can be used to implement a smooth driving in that only after expiring of the time-out period the well-defined action are performed.

Further embodiments of the present invention may be used to implement a smooth launching of the vehicle. To achieve this, the clutch control unit 120 may at first, upon activation of active state, disengage the clutch 10. Next, the driver can engage or shift a gear, after which the clutch 10 can be engaged again followed by an automatic launch of the vehicle.

It should be understood that the driver interface 110 can be any means which is suitable to switch between at least two states: the active state and the inactive state. For example, the driver interface 110 may be a single button which, when it is pressed once, will activate the active state, whereas after a certain time period the system will automatically go back into the inactive state. Therefore, a separate switching of the driver may not be needed to deactivate the system.

Vehicles with manual transmission typically include a clutch pedal 130 so that if the clutch control system is implemented in such vehicles, the driver interface 110 may effectively turn off the automatic clutch control, when the active state is switched back into the inactive state (by the driver or upon expiring of the time-out period of the driver).

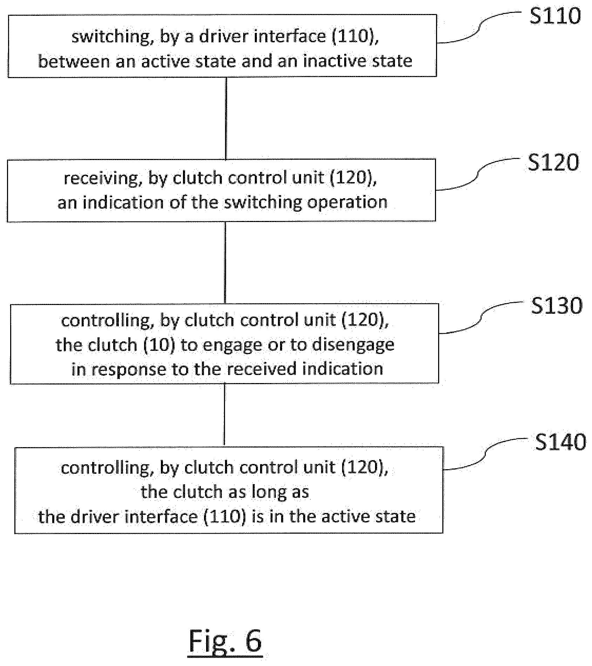

Fig. 6 depicts a flow diagram of a method for controlling a clutch 10 of a vehicle with a manual transmission 20. The method comprises the steps: switching S110, by a driver interface 110, between an active state and an inactive state, and receiving S120, by clutch control unit 120, an indication of the switching operation S110, controlling S130, by clutch control unit 120, the clutch 10 to engage or to disengage in response to the received indication, and/or controlling S140, by clutch control unit 120, the clutch as long as the driver interface 110 is in the active state.

In further embodiments all functions described before in conjunction with the clutch control system may be implemented also as further, optional, method steps further limiting the method as depicted in Fig. 6.

This method may also be a computer-implemented method, a person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the a computer or processor.

Advantageous aspects of the various embodiments can be summarized as follows:
A clutch control system according to embodiments of the present invention is designed especially for manually operated transmissions where a clutch pedal 130 might be present. The main characteristics of the system is a separate clutch control driver interface (driver interface 110), which is connected to the system to provide a direct selection possibility for the driver to request the clutch automated control or not (see Fig. 2).

Embodiments relate also to a clutch control system that enables a different clutch engagement (or a different level) as the clutch engagement indicated by a clutch pedal 130 operated by the driver (see Fig. 3). Therefore, even if the clutch pedal 130 is part of the overall vehicle system, the clutch 10 can be controlled independently from the optional clutch pedal 130.

Further embodiments (see Fig. 4) are related to a system with additional driver operators defining the vehicle motion state (e.g., the brake pedal 60 indicating a braking state, the acceleration pedal 70 indicating an acceleration state), wherein the clutch pedal 130 is an optional operator. The clutch control driver interface 110 may be connected any ECU which is able to transfer the state of the interface 110 to the vehicle communication bus 50 connected to the clutch control ECU 120. The clutch control 120 may also be connected directly to the clutch control ECU 41 (without using the vehicle communication bus 50).

The clutch control driver interface 110 may have at least two states: an activated and an inactive. The clutch control driver interface 110 may be stable in the inactive state. Optionally, a locking mean (not shown) is provided to lock the clutch control driver interface 110 in the activated state. Alternatively, the clutch control driver interface 110 may be stable in the activated state. Again, optional locking means may be provided to lock the inactive state.

The clutch control driver interface 110 may preferably be located on the gear lever when it is operated by hand. As another preferred option, the clutch control driver interface 110 may be located on the left side of the cabin floor, when it is operated by foot (see Fig. 5).

The inactive state may disable immediately or after a certain timeout period the automated control of the clutch 10. Depending on existence of the clutch pedal 130 in the system, the clutch engagement portion in the inactive state of the clutch control driver interface 110 can be:
(i) same portion as set by the pedal (with clutch pedal 130), or
(ii) fully engaged (without clutch pedal 130).

In the transition, when clutch control driver interface 110 is getting activated, the clutch 10 may be controlled to be disengaged. Hence, the driveline is decoupled independently of the position of clutch pedal 130 (if it exists).

Next, when it is in the activated state, the clutch 10 starts to engage, for example, at the moment when a driver intention to launch the vehicle is detected. For this purpose the accelerator pedal and/or gear lever position may be used and monitored.

If the clutch control driver interface 110 is kept activated, the further driver acceleration and/or deceleration demands are followed and the driveline torque may be set by the engagement portion of the clutch 10 in accordance to the acceleration and deceleration demand.

Optionally, the characteristic defining the relation between the driver demand and the engagement portion can be set by parameters within the range that does not lead to unintended stall of the engine. In particular, when the driver demand indicates a deceleration, the clutch 10 starts to disengage when the engine brake is getting disabled and the engine drive torque starts to increase. In case of acceleration demand, the engagement of the clutch 10 is increased, for example, in accordance to an increase of the acceleration demand for as long as the engine is able to provide the required torque at the actual engine speed.

Finally, once the clutch control driver interface 110 is getting inactive (in the inactive state), the clutch control 120 starts to engage the clutch 10 in order to make the driveline engaged. This may be achieved within a minimum time possible without causing discomfort of the driver or stall of the engine.

Therefore, via the operation of the clutch control driver interface 110 the following vehicle operations can be realized to control the clutch engagement portion without using an additional clutch pedal 130:
(a) A smooth start of the vehicle by depressing the accelerator pedal (the clutch control driver interface 110 is continuously in the activated state).
(b) Utilization of the engine brake and opening the driveline before the engine stalls to arrive at a standstill by brake pedal operation (the clutch control driver interface 110 is continuously in the activated state).
(c) A fast launch of the vehicle (by switching clutch control driver interface 110 to inactive state).
(d) Immediate disengage of the clutch 10 (by switching the clutch control driver interface 110 to the activated state).
(e) Disengage of the clutch before gear shift (by switching the clutch control driver interface 110 to activated state) and engage the clutch after gear shift (by switching the clutch control driver interface 110 to the inactive state).

If the optional clutch pedal 130 is present it is further possible to provide a signal proportional to the clutch pedal position and thus:
(f) Setting the clutch engagement portion in accordance to the clutch pedal position (when clutch control driver interface 110 is in the inactive state).

The method according to embodiments may also be applied when clutch control driver interface 110 controls the gear position of the transmission split gear. For example, when the clutch control driver interface state is switched to the active state, the clutch 10 may be disengaged. In the disengaged state, the spilt gear may be operated to high ratio position. When the split gear is closed in high ratio position, the clutch 10 can be engaged. In the further embodiments the assignment of the active state of the clutch control driver interface 110 to the split gear position can be changed by definition.

Further advantageous embodiments of the present invention relate to a method of a clutch control system of vehicle transmission driving a manually operated transmission. The clutch control system is connected to a vehicle communication bus 50 and is able to set the clutch engagement portion differently than the driver clutch engagement portion demand. The method is characterized in that it uses a link to at least one clutch control driver interface 110 capable to indicate activated and inactive state, wherein the engagement portion of clutch 10 is set automatically, when the state of said clutch control driver interface 110 is changing or stays activated.

The method may further be characterized in that said clutch control driver interface 110 is a switch operated by the hand of the driver preferably located on gear lever or switch operated by foot of the driver.

The method may further be characterized in that said clutch control driver interface 110 can be locked in the activated state.

The method may further be characterized in that said clutch control driver interface 110 operates the transmission split gear.

The method may further be characterized in that the clutch engagement portion can be controlled directly by the optionally provided clutch pedal 130 in the inactive state of said clutch control driver interface 110.

The method may further be characterized in that a vehicle launch is performed in accordance to the driver acceleration demand without direct driver setting on the clutch engagement portion when said clutch control driver interface 110 is in the activated state.

The method may further be characterized in that the control of vehicle transmission clutch fully disengages the clutch 10, when said clutch control driver interface 110 is getting activated.

The method may further be characterized in that said control of vehicle transmission clutch fully engages the clutch 10, when said clutch control driver interface 110 is getting inactive and, optionally, the given clutch pedal 130 is released.

The method may further be characterized in that said control of vehicle transmission clutch 10 manages the engagement and disengagement of the clutch 10 automatically according to the driver acceleration and deceleration demands to provide a vehicle launch and to avoid an engine stall, when said clutch control driver interface 110 is getting active at standstill, as long as it is in activated state.

The description and drawings merely illustrate the principles of the disclosure. It will thus be appreciated that those skilled in the art will be able to devise various arrangements that, although not explicitly described or shown herein, embody the principles of the disclosure and are included within its scope as defined by the claims.

### List of reference signs

- 10: clutch
- 20: manual transmission
- 30: engine
- 60: braking interface
- 70: acceleration interface
- 40-43: electronic control units (ECUs)
- 50: vehicle communication bus
- 110: driver interface
- 115: signal line
- 120: clutch control unit
- 122: control line
- 125: communication line
- 130: clutch pedal
- 135: clutch connection line

## Claims

1. A clutch control system for a vehicle with a clutch (10) and a manual transmission (20), the clutch control system comprising:
a driver interface (110) configured to switch between an active state and an inactive state, wherein the driver interface (110) is operable by a driver of the vehicle;
a clutch control unit (120) configured to receive an indication of a switching operation of the driver interface (110), wherein the clutch control unit (120) is operable to control the clutch (10) to engage or to disengage in response to the received indication and to control the clutch as long as the driver interface (110) is in the active state; and
**characterized in that**
a timer coupled to the clutch control unit (120) and configured to measure a time-out period, wherein the timer is activated upon switching the driver interface (110) from the active state to the inactive state and the clutch control unit (120) is configured to engage the clutch (10) only upon expiring of the time-out period.

2. The clutch control system according to claim 1, wherein the clutch control unit (120) is configured to disengage the clutch (10), when the indication indicates a switching into the active state.

3. The clutch control system according to claim 1 or 2, wherein the clutch control unit (120) is configured to engage the clutch (10), when the indication indicates a switching into the inactive state.

4. The clutch control system according to claim 1 or claim 2, wherein the vehicle further comprises a clutch pedal (130) coupled to the clutch control unit (120), wherein the clutch control unit (120) is configured, when the driver interface (110) is in the inactive state, to control the clutch (10) based on an actuation of the clutch pedal (130).

5. The clutch control system according to one of the preceding claims, wherein the time-out period is equal or longer than a minimum time period needed for engaging the clutch without stalling an engine (30) of the vehicle.

6. The clutch control system according to one of the preceding claims, wherein the driver interface (110) further comprising locking means to lock the driver interface (110) in the active state.

7. The clutch control system according to one of the preceding claims, wherein the driver interface (110) is usable manually by the driver.

8. The clutch control system according to one of the preceding claims, wherein the clutch control unit (120) is further configured to control a transmission split gear.

9. The clutch control system according to one of the preceding claims, wherein the clutch control unit (120) is configured to receive an acceleration demand initiated by the driver, wherein, when the driver interface (110) is in the active state, the clutch control unit (120) is configured to engage the clutch (10), when the clutch control unit (120) receives the accelerations demand.

10. The clutch control system according to one of the preceding claims, wherein the clutch control unit (120) is configured to receive a deceleration demand initiated by the driver and to determine a critical state of an engine (30), wherein, when the driver interface (110) is in the active state and the clutch control unit (120) receives the deceleration demand and the critical engine state is determined, the clutch control unit (120) is configured to disengage the clutch (10) to prevent a stall of the engine (30).

11. The clutch control system according to claim 10, the vehicle is configured to acquire parametric data determining an engine state so that the critical state of the engine (30) corresponds to an engine state wherein the parametric data are outside a predetermined range, wherein the parametric data comprise at least one of the following: a rotational speed of the engine (30), a torque demand, a level of the deceleration demand.

12. A vehicle comprising:
a manual transmission (20);
an engine (30);
a clutch (10) configured to couple and decouple the manual transmission (20) and the engine (30);
a braking interface (60) for providing a deceleration demand;
an acceleration interface (70) for providing an acceleration demand to the engine (30); and
clutch control system according to one of claims 1 to 11.

13. A method for controlling a clutch (10) of a vehicle with a manual transmission (20), the method comprising:
switching (S110), by a driver interface (110), between an active state and an inactive state; and
receiving (S120), by clutch control unit (120), an indication of the switching operation (S110);
controlling (S130), by clutch control unit (120), the clutch (10) to engage or to disengage in response to the received indication;
controlling (S140), by clutch control unit (120), the clutch as long as the driver interface (110) is in the active state;
**characterized in that**
activating a timer upon switching the driver interface (110) from the active state to the inactive state;
measuring, by the timer, a time-out period; and
engaging, by the clutch control unit (120), the clutch (10) only upon expiring of the time-out period.

14. A computer program having a program code for performing the method of claim 13, when the computer program is executed on a computer or processor.

## Patentansprüche

1. Kupplungssteuersystem für ein Fahrzeug mit einer Kupplung (10) und einem Handschaltgetriebe (20), umfassend:
eine Fahrerschnittstelle (110), die zum Schalten zwischen einem aktiven und einem inaktiven Zustand ausgelegt ist, wobei die Fahrerschnittstelle (110) von einem Fahrer des Fahrzeugs zu betätigen ist;
eine Kupplungssteuereinheit (120), die zum Empfang einer Anzeige eines Schaltvorgangs der Fahrerschnittstelle (110) ausgelegt ist, wobei die Kupplungssteuereinheit (120) zum Steuern der Kupplung (10) zum Ein- oder Ausrücken als Reaktion auf die empfangene Anzeige und zum Steuern der Kupplung im aktiven Zustand der Fahrerschnittstelle (110) betätigt werden kann; und
**gekennzeichnet durch**
einen an die Kupplungssteuereinheit (120) gekoppelten und zur Messung einer Auszeit ausgelegten Zeitgeber, wobei der Zeitgeber auf Schalten der Fahrerschnittstelle (110) vom aktiven in den inaktiven Zustand aktiviert wird und die Kupplungssteuereinheit (120) zum Einrücken der Kupplung (10) erst nach Ablauf der Auszeit ausgelegt ist.

2. Kupplungssteuersystem nach Anspruch 1, wobei die Kupplungssteuereinheit (120) zum Ausrücken der Kupplung (10) ausgelegt ist, wenn die Anzeige ein Schalten in den aktiven Zustand andeutet.

3. Kupplungssteuersystem nach Anspruch 1 oder 2, wobei die Kupplungssteuereinheit (120) zum Einrücken der Kupplung (10) ausgelegt ist, wenn die Anzeige ein Schalten in den inaktiven Zustand andeutet.

4. Kupplungssteuersystem nach Anspruch 1 oder 2, wobei das Fahrzeug weiter ein an die Kupplungssteuereinheit (120) gekoppeltes Kupplungspedal (130) umfasst, wobei die Kupplungssteuereinheit (120) im inaktiven Zustand der Fahrerschnittstelle (110) zum Steuern der Kupplung (10) auf der Basis einer Betätigung des Kupplungspedals (130) ausgelegt ist.

5. Kupplungssteuersystem nach einem der vorhergehenden Ansprüche, wobei die Auszeit mindestens einer Mindestzeit entspricht, die zum Einrücken der Kupplung ohne Abwürgen eines Motors (30) des Fahrzeugs erforderlich ist.

6. Kupplungssteuersystem nach einem der vorhergehenden Ansprüche, wobei die Fahrerschnittstelle (110) weiter Verriegelungsmittel zum Verriegeln der Fahrerschnittstelle (110) im aktiven Zustand umfasst.

7. Kupplungssteuersystem nach einem der vorhergehenden Ansprüche, wobei die Fahrerschnittstelle (110) vom Fahrer manuell benutzt werden kann.

8. Kupplungssteuersystem nach einem der vorhergehenden Ansprüche, wobei die Kupplungssteuereinheit (120) weiter zum Steuern eines Getriebeteilgangs ausgelegt ist.

9. Kupplungssteuersystem nach einem der vorhergehenden Ansprüche, wobei die Kupplungssteuereinheit (120) zum Empfang einer vom Fahrer ausgelösten Beschleunigungsanforderung ausgelegt ist, wobei die Kupplungssteuereinheit (120) im aktiven Zustand der Fahrerschnittstelle (110) zum Einrücken der Kupplung (10) ausgelegt ist, wenn die Kupplungssteuereinheit (120) die Beschleunigungsanforderung empfängt.

10. Kupplungssteuersystem nach einem der vorhergehenden Ansprüche, wobei die Kupplungssteuereinheit (120) zum Empfang einer vom Fahrer ausgelösten Abbremsanforderung und zur Bestimmung eines kritischen Zustandes des Motors (30) ausgelegt ist, wobei die Kupplungssteuereinheit (120) im aktiven Zustand der Fahrerschnittstelle (110) und wenn die Kupplungssteuereinheit (120) die Abbremsanforderung empfängt und der kritische Motorzustand bestimmt wird, zum Ausrücken der Kupplung (10) zwecks Verhindern eines Abwürgens the Motors (30) ausgelegt ist.

11. Kupplungssteuersystem nach Anspruch 10, wobei das Fahrzeug zur Beschaffung von einen Motorzustand bestimmenden parametrischen Daten ausgelegt ist, so dass der kritische Zustand des Motors (30) einem Motorzustand entspricht, in dem die parametrischen Daten außerhalb eines vorgegebenen Bereichs liegen, wobei die parametrischen Daten mindestens einen der folgenden Parameter umfassen: eine Drehzahl des Motors (30), eine Drehmomentanforderung, eine Beschleunigungsniveauanforderung.

12. Fahrzeug umfassend:
ein Handschaltgetriebe (20);
einen Motor (30);
eine zum Koppeln und Entkoppeln des Handschaltgetriebes (20) und des Motors (30) ausgelegte Kupplung (10);
eine Bremsschnittstelle (60) zur Erstellung einer Abbremsanforderung;
eine Beschleunigungsschnittstelle (70) zur Erstellung einer Beschleunigungsanforderung an den Motor (30); und
ein Kupplungssteuersystem nach einem der Ansprüche 1 bis 11.

13. Verfahren zum Steuern einer Kupplung (10) eines Fahrzeugs mit einem Handschaltgetriebe (20), umfassend:
das Schalten (S110) zwischen einem aktiven und einem inaktiven Zustand durch eine Fahrerschnittstelle (110); und
den Empfang (S120) einer Anzeige des Schaltvorgangs (S110) durch eine Kupplungssteuereinheit (120);
das Steuern (S130) der Kupplung (10) durch die Kupplungssteuereinheit (120) zum Einrücken oder Ausrücken als Reaktion auf die empfangene Anzeige;
das Steuern (S140) der Kupplung durch die Kupplungssteuereinheit (120), solange die Fahrerschnittstelle (110) im aktiven Zustand ist;
**gekennzeichnet durch**
das Aktivieren eines Zeitgebers nach Schalten der Fahrerschnittstelle (110) vom aktiven in den inaktiven Zustand;
das Messen einer Auszeit durch den Zeitgeber; und
das Einrücken der Kupplung (10) durch die Kupplungssteuereinheit (120) erst nach Ablauf der Auszeit.

14. Computerprogramm mit einem Programmcode zur Ausführung des Verfahrens nach Anspruch 13, wenn das Computerprogramm auf einem Computer oder Prozessor läuft.

## Revendications

1. Système de commande d'un embrayage d'un véhicule ayant un embrayage (10) et une boîte de vitesse (20) à transmission manuelle, le système de commande d'un embrayage comprenant :
une interface (110) de conducteur, configurée pour commuter entre un état actif et un état inactif, l'interface (110) de conducteur pouvant être mise en fonctionnement par un conducteur du véhicule ;
une unité (120) de commande d'embrayage, configurée pour recevoir une indication d'une opération de commutation de l'interface (110) de conducteur, l'unité (120) de commande d'embrayage pouvant fonctionner pour commander l'embrayage (10), afin d'embrayer ou de débrayer en réaction à l'indication reçue, et pour commander l'embrayage tant que l'interface (110) de conducteur est dans l'état actif ; et
**caractérisé par**
une minuterie, couplée à l'unité (120) de commande d'embrayage et configurée pour mesurer une durée, la minuterie étant activée par passage de l'interface (110) de conducteur de l'état actif à l'état inactif et l'unité (120) de commande d'embrayage étant configurée pour embrayer l'embrayage (10) seulement après expiration de la durée.

2. Système de commande d'un embrayage suivant la revendication 1, dans lequel l'unité (120) de commande d'embrayage est configurée pour débrayer l'embrayage (10) lorsque l'indication indique une commutation à l'état actif.

3. Système de commande d'un embrayage suivant la revendication 1 ou 2, dans lequel l'unité (120) de commande d'embrayage est configurée pour embrayer l'embrayage (10) lorsque l'indication indique une commutation à l'état inactif.

4. Système de commande d'un embrayage suivant la revendication 1 ou la revendication 2, dans lequel le véhicule comprend, en outre, une pédale (130) d'embrayage, couplée à l'unité (120) de commande d'embrayage, l'unité (120) de commande d'embrayage étant configurée pour, lorsque l'interface (110) de conducteur est dans l'état inactif, commander l'embrayage (10) sur la base d'un actionnement de la pédale (130) d'embrayage.

5. Système de commande d'un embrayage suivant l'une des revendications précédentes, dans lequel la durée est supérieure ou égale à une durée minimum nécessaire pour embrayer l'embrayage sans qu'un moteur (30) du véhicule cale.

6. Système de commande d'un embrayage suivant l'une des revendications précédentes, dans lequel l'interface (110) de conducteur comprend, en outre, des moyens de verrouillage pour verrouiller l'interface (110) de conducteur dans l'état actif.

7. Système de commande d'un embrayage suivant l'une des revendications précédentes, dans lequel l'interface (110) de conducteur peut être utilisée manuellement par le conducteur.

8. Système de commande d'un embrayage suivant l'une des revendications précédentes, dans lequel l'unité (120) de commande d'embrayage est configurée, en outre, pour commander un engrenage de division de boîte de vitesse.

9. Système de commande d'un embrayage suivant l'une des revendications précédentes, dans lequel l'unité (120) de commande d'embrayage est configurée pour recevoir une demande d'accélération lancée par le conducteur, dans lequel, lorsque l'interface (110) de conducteur est dans l'état actif, l'unité (120) de commande d'embrayage est configurée pour embrayer l'embrayage (10) lorsque l'unité (120) de commande d'embrayage reçoit la demande d'accélération.

10. Système de commande d'un embrayage suivant l'une des revendications précédentes, dans lequel l'unité (120) de commande d'embrayage est configurée pour recevoir une demande de décélération lancée par le conducteur et pour déterminer un état critique d'un moteur (30), dans lequel, lorsque l'interface (110) de conducteur est dans l'état actif et lorsque l'unité (120) de commande d'embrayage reçoit la demande de décélération et lorsque l'état critique du moteur est déterminée, l'unité (120) de commande d'embrayage est configurée pour débrayer l'embrayage (10), afin d'empêcher le moteur (30) de caler.

11. Système de commande d'un embrayage suivant la revendication 10, le véhicule étant configuré pour acquérir des données paramétriques déterminant un état du moteur, de manière à ce que l'état critique du moteur (30) corresponde à un état du moteur, dans lequel les données paramétriques sont à l'extérieur d'une plage déterminée à l'avance, dans lequel les données paramétriques comprennent au moins l'un de ce qui suit : une vitesse de rotation du moteur (30), une demande de couple, un niveau de la demande de décélération.

12. Véhicule comprenant :
une boîte de vitesse (20) à commande manuelle ;
un moteur (30) ;
un embrayage (10), configuré pour coupler et découpler la boîte de vitesse (20) à commande manuelle et le moteur (30) ;
une interface (60) de freinage pour fournir une demande de décélération ;
une interface (70) d'accélération pour fournir une demande d'accélération au moteur (30) ; et
un système de commande d'embrayage suivant l'une des revendications 1 à 11.

13. Procédé de commande d'un embrayage (10) d'un véhicule à boîte de vitesse (20) à commande manuelle, le procédé comprenant :
commuter (S110), par une interface (110) de conducteur, entre un état actif et un état inactif ; et
recevoir (S120), par une unité (120) de commande d'embrayage, une indication de l'opération (S110) de commutation ;
commander (S130), par l'unité (120) de commande d'embrayage, l'embrayage (10) pour embrayer ou pour débrayer en réaction à l'indication reçue ;
commander (S140), par l'unité (120) de commande d'embrayage, l'embrayage tant que l'interface (110) de conducteur est dans l'état actif ;
**caractérisé en ce que**
on active une minuterie au passage de l'interface (110) de conducteur de l'état actif à l'état inactif ;
on mesure, par la minuterie, une durée ; et
on embraye, par l'unité (120) de commande d'embrayage, l'embrayage (10), seulement après expiration de la durée.

14. Programme d'ordinateur ayant un code de programme pour effectuer le procédé suivant la revendication 13, lorsque le programme d'ordinateur est exécuté sur un ordinateur ou un processeur.
